# EUROPEAN PATENT SPECIFICATION

(11) **EP 0 756 736 B1**
(45) Date of publication and mention of the grant of the patent: **02.06.1999**
(21) Application number: 93908138.6
(22) Date of filing: 03.03.1993
(51) Int. Cl.: G08B 15/00

(54) **METHOD OF MAKING A RADIO-FREQUENCY DETECTION LABEL WITH A MINIMUM NUMBER OF ELECTRONIC COMPONENTS**
PRODUKTIONSVERFAHREN FUER EINE ERFASSUNGSMARKE MIT EIN MINIMUM AN ELEKTRONISCHEN KOMPONENTEN
PROCEDE DE FABRICATION D'UNE ETIQUETTE DE DETECTION A HAUTES FREQUENCES AVEC UN MINIMUM DE COMPOSANTS ELECTRONIQUES

(30) Priority: 03.03.1992 NL 9200396
(43) Date of publication of application: 05.02.1997
(73) Proprietor: N.V. Nederlandsche Apparatenfabriek NEDAP, NL-7141 DE Groenlo (NL)
(72) Inventor: DE JONG, Hendrik, Johannes, NL-7141 XJ Groenlo (NL); DE JONG, Willem, Otto, NL-7103 HC Winterswijk (NL)
(74) Representative: Smulders, Theodorus A.H.J., Ir.
(86) International application number: NL9300050
(87) International publication number: WO9318493

(56) References cited:
- EP-A- 0 073 172
- CH-A- 669 079
- CH-A- 676 511
- US-A- 4 196 418
- US-A- 4 995 552
- US-A- 5 025 550
- PATENT ABSTRACTS OF JAPAN vol. 010, no. 363 (E-461)5 December 1986
- PATENT ABSTRACTS OF JAPAN vol. 011, no. 363 (E-560)26 November 1987

## Description

This invention relates to a method for making a radio-frequency detection label which combines a relatively large detection distance with an absolute minimum number of electronic components, so that, in addition to a low cost price, a high reliability is obtained.

This invention further relates to a label obtained using the method according to the invention. Such a label, usually operating in the radio-frequency range of from 100 to 150 kHz, generally comprises an antenna coil (with or without a ferrite core), a tuning capacitor, and, in the case of a coded identification label, an integrated circuit (IC) and a supply capacitor. The energy for the operation of the label is drawn from the electromagnetic interrogation field which is emitted by a transmitter and has a frequency which is equal to the resonant frequency of the antenna coil and the tuning capacitor of the label. The above-mentioned supply capacitor is charged and provides the supply voltage for the operation of the IC, which contains a code memory and the control elements for subsequently transmitting the stored code back. An example of such a label is described in applicant's US patent application No. 4,196,418.

Modern micro-electronics techniques currently make it possible to integrate an increasing number of the above-mentioned components on one chip. For example, a construction is known in which all of the above-mentioned components, i.e. including the coil, are accommodated on one chip. As will be clear, in that case the coil can only be very small so as to limit the dimensions of the chip in view of its cost price. The small coil, however, gives a very small detection distance, for example a few millimetres. For many applications much greater detection distances (e.g. 30-100 cm) are required. In those cases, use is made of a separate coil, wound, for instance, from copper wire, and provided, if necessary, with a core, for example made of ferrite, so that it works as a magnetic flux concentrator. The remaining components, i.e., the tuning and supply capacitors and the electronic switching system, can be advantageously integrated on one chip. This gives rise to two problems which have to be solved, viz., the technique of electrically connecting the coil to the chip and obtaining the correct tuning of the coil with the tuning capacitor on the chip. The latter has a much greater spread in capacity than a loose capacitor (e.g. ± 15% versus ± 5%), so that the self-induction of the coil will have to be individually adapted during manufacture. Currently, an electrical connection between the coil leads and the chip is typically effected by using an intermediate piece, such as a substrate or a lead frame. First, the IC is connected on the chip, to the substrate or to the lead frame by means of thin wires or so-called soldering bumps, whereafter the coil wires are separately soldered onto the leads of the lead frame.

An example of a construction with a lead frame, used in an injectable RF-ID label, is described in U.S. Patent No. 5,025,550 to Zirbes et al. With this construction, however, the minimum number of components is not achieved: lead frame and IC housing are extra.

In the construction according to the invention, no substrate or lead frame is used, but the coil leads are connected directly to the chip. This last is known per se from patent specification No. WO 87/04900 of Taylor et al, where the problem of the connection between the chip and the wire is solved by using anodized aluminium wire instead of copper wire for the coil. The anodized aluminium wire can be ultrasonically welded onto the chip relatively easily. A disadvantage of aluminium wire is its relatively high specific resistance, which results in a low quality factor Q for the resonant circuit. As a result, the circuit oscillates less easily. Unnecessary energy is lost due to high internal resistance. All this leads to a drastic decrease in detection distance. Moreover, this construction further utilizes a substrate as a support for the chip.

The object of the present invention is to provide a technique which makes it possible to use insulated copper wire again, as conventionally used for a coil winding, so that the detection distance is maximized again owing to the low resistance of copper.

The problem associated with the use of insulated copper wire (so-called winding wire) for the intended purpose is the presence of the tough plastic insulation skin, which makes it impossible to ultrasonically weld such a wire directly onto the connection surfaces (so-called pads) of a chip IC in a reliable manner. The insulation layer can alternatively consist of a type of varnish, which permits the wire to be soldered. This requires a temperature of between 350°C and 400°C, which is normally attained by immersing the wire in a tin bath at this high temperature. Such a tinning process is too coarse for the fine structures used for IC connections (wire diameter < 100 µ, pads with dimensions of for example 100 µ x 200 µ). Additional problems may also be caused by the oxidation of the tin bath at the high temperatures required and the contamination of the tools. Further, as a result of tin diffusion into the thin copper wire, the latter may become brittle and, as a consequence, break easily.

According to the invention, the problem of connecting insulated copper wire directly to the IC can be solved through the prior, local removal of the insulation from the wire by means of a hot gas jet. Research shows that the temperature of such a gas jet can for example be between 550°C and 850°C. To prevent oxidation of the copper, an inert gas (e.g. argon or nitrogen) can be used, preferably with admixture of a few percent of hydrogen. This last is to prevent residual oxidation owing to small amounts of entrained oxygen from the atmosphere.

The copper wire locally bared in this way can now be directly finished on the IC, utilizing, for example, one of the following jointing techniques:
- ultrasonic welding onto the conventional aluminium pads;
- ditto onto pads provided with a suitable (noble) metal layer or "bump";
- thermo-compression welding onto pads provided with a noble metal layer (e.g. a gold layer);
- soldering onto pads provided with lead-tin;
- gluing onto aluminium or gold pads with conducting glue;
- gluing on aluminium or gold pads with so-called anisotropically conducting foil.

According to an alternative elaboration of the concept of the invention, the insulation material of the coil wire can be removed substantially simultaneously with the actual jointing process by using the increased temperature of the jointing process itself. Soldering can for example be effected on connection surfaces provided with so-called "soldering bumps", or the thermo-compression welding technique can be used, performed on pads provided with a noble metal layer (e.g. gold bumps).

Hereinafter, the invention will be further explained with reference to the appended drawings of some exemplary embodiments of the invention.

Fig. 1 schematically shows a conventional construction of an identification label with a so-called air-cored coil.

Fig. 2 shows an example of a variant of Figure 1, with a coil comprising a ferromagnetic core, which yields a cylindrical shape.

Figs. 3 and 4 schematically show similar configurations to the ones shown in Figs. 1 and 2, but here the technique according to the invention has been used.

Fig. 5 schematically shows an example of a device for de-insulating the winding wire in accordance with the invention.

Fig. 6 schematically illustrates a variant of the invention; and

Fig. 7 schematically shows another variant.

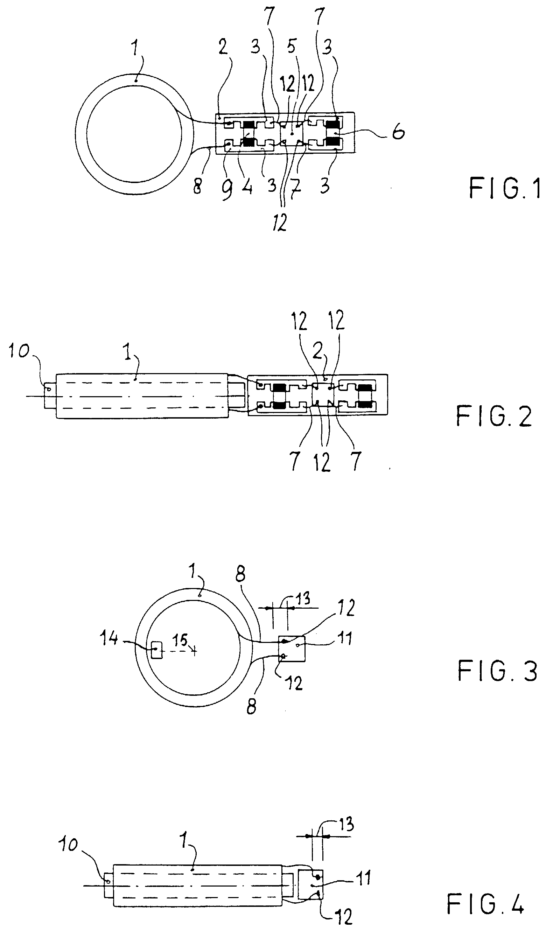

Fig. 1 illustrates the current state of the art regarding an integrated circuit comprising an antenna coil, for example of a detection and/or identification label, in which a receiver antenna 1 is used, which is constructed as a so-called air-cored coil without a ferromagnetic core. A substrate 2 is provided with conducting tracks 3. Components 4 (e.g. a resonance capacitor), 5 (e.g. an integrated circuit) and 6 (e.g. a supply capacitor) are arranged on the substrate, for example by gluing. The capacitors 4 and 6 are soldered to the conducting tracks 3 on the substrate. The integrated circuit (IC) 5 is electrically connected in the conventional way with very thin ultrasonically welded gold wires 7, which connect the conducting tracks 3 of the substrate and connecting points or surfaces 12 of the IC to each other. The coil leads 8, like the coil itself, consist of winding wire which can be soldered. The coil leads are soldered onto the conducting tracks 3 of the substrate at 9. The insulation layer melts during the soldering process so that the soldered joint can be made on the copper of the winding wire.

Fig. 2 (current state of the art) schematically shows a similar configuration to Fig. 1, but the flat air-cored coil has been replaced by a more cylindrical coil 1, which comprises a core 10 of ferromagnetic material, e.g. ceramic ferrite.

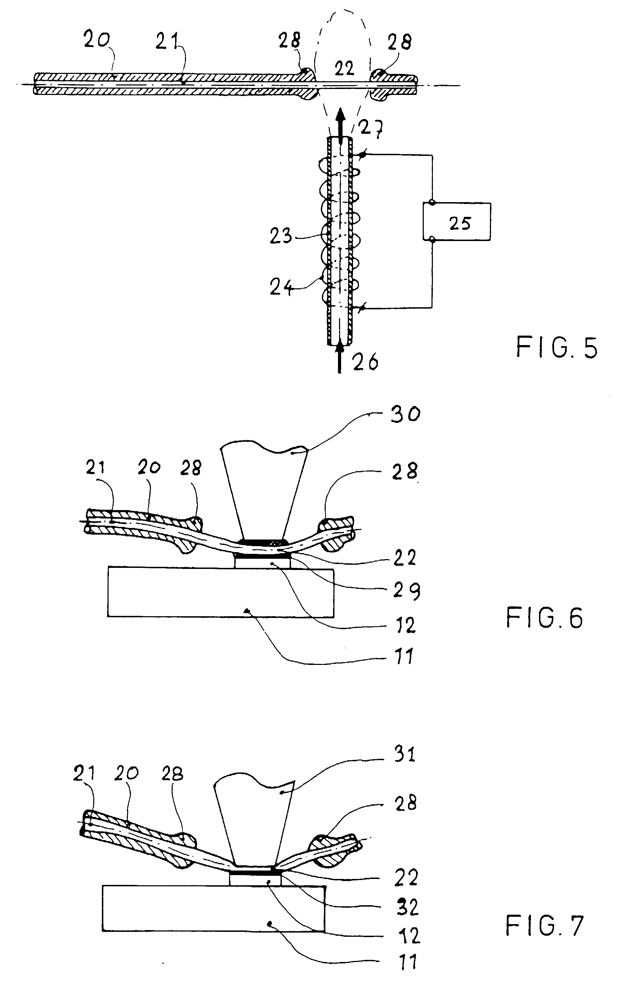

Fig. 3 schematically shows an embodiment of a label as shown in Fig. 1, but now it has been manufactured by the use of the present invention. The components 4, 5 and 6 are now provided on one IC 11, and coil 1 is electrically connected through its leads 8, directly to the connection surfaces 12 of IC 11. For that purpose, the coil leads have first been bared along a short length 13 by using a hot gas jet (see Fig. 5) and are then electrically connected to the connection surfaces 12 on the IC 11 in the conventional way. This joint can for example be made by means of an ultrasonic wedge connection directly to the aluminium surface of the IC connection surfaces. Alternatively, the above-mentioned connection surfaces of the IC can be provided beforehand with a gold "bump" or with another suitable metal covering. In the case of a gold bump or a bump of another suitable metal, a thermo-compression weld can be used as well. The joint is then made by pressing the copper wire onto the bump using sufficient surface pressure and a sufficiently high temperature.

According to another suitable connecting method, the connection surfaces 12 of the IC are provided with a lead-tin layer on which bare copper wire can be soldered by the addition of a little soldering flux, but without additional solder being supplied.

Finally, the connection can be made using conducting glue which has been priorly applied, in unhardened condition, to the IC connection surfaces 12. A conducting glued joint can also be made using an anisotropic or Z-conducting glue foil, which is pressed between the wire and the IC connection surface and, upon hardening of the glue, becomes conductive only at that spot.

An individual antenna coil can be set to the correct self-induction in two ways:
a) through adjustment (which may or may not be automatic) of the number of windings to the priorly measured, individual value of the resonance capacitor on the IC, or
b) through the later arrangement of a small block 14 (Fig. 3) of ferromagnetic material, which, for example, can be moved and fixed radially along a radius 15.

Fig. 4 shows a similar configuration to Fig. 2, but now realized utilizing the invention.

Baring and connecting the coil wire to the IC surfaces is done in one of the ways described in Fig. 3 and shown in Fig. 5, only now coil 1 is of an elongate, cylindrical shape and comprises a core formed by a rod of ferromagnetic material 10. The individual coil can be set to the correct self-induction in two ways:
a) by (automatically) adapting the number of windings to the priorly measured, individual value of the resonance capacitor on the IC 11 concerned, or
b) by lengthwise shifting and fixing the core 10 in the coil 1 afterwards.

If so desired, the IC can be glued to the front end e.g. to the end face of the ferromagnetic rod.

Fig. 5 schematically illustrates how, in accordance with the invention, a copper wire 21 comprising an insulating plastic layer 20 can be rendered bare at 22. A thin tube 23 of a suitable material, for example ceramic material, is provided with a wound heating winding 24 which can be energized by a power source 25. At 26, the gas to be used is supplied under pressure and the gas leaves the tube again in heated condition at 27. The insulation layer 20 then melts at the portion 22 of the wire 21 that is located opposite the outflow end of the tube 23. The insulation material draws away in lateral direction, as shown at 28, leaving a bare patch 22. A part of the insulation layer 20 can also vaporize during the heating process, depending on the plastic chosen as wire insulation and the gas temperature. The gas 26 is preferably of a non-oxidizing composition. Suitable gases are for example nitrogen or argon, to which, if necessary, a few percent of hydrogen can have been added so as to reduce oxides which could be formed during the de-insulation of the copper surface, for example by the action of entrained oxygen from the surrounding atmosphere.

The temperature of the emergent gas at 27 is preferably between 550°C and 850°C, depending on the insulation material and the thickness of the copper wire.

Figs. 6 and 7 schematically illustrate the use of a soldering technique and a thermo-compression welding technique without prior removal of insulation material. It appears that it is not always necessary to first remove the insulation material from the copper wire.

Fig. 6 shows a soldered joint which has been made without removal of the insulation material. A connection surface 12 of an IC 11 arranged on a chip is provided with a quantity of solder 29 (soldering bump). An insulated copper wire 20, 21 is pressed onto the solder 29 with a soldering bit 30. The soldering bit is heated to above the melting point of the solder. As a result, as shown, the insulation layer draws away to the locations 28 on either side of the soldering bit. The solder 29 can then "wet" the bare copper at the connection surface, so that a soldered joint can be made. The heating of the soldering bit can now be switched off, so that the soldered joint can cool. The soldering bit can then be withdrawn.

A soldering flux must be used to promote a good flow of the solder.

Fig. 7 schematically illustrates the manner in which a thermo-compression weld is made. The connection surface 12 of the IC 11 is provided with a suitable metal layer (bump) 32, preferably a thin layer of a noble metal, e.g. gold. The copper wire 21, while still possessing an insulation sheath, is pressed against the connection surface with a heated soldering bit 31. The bit has a relatively high temperature, e.g. of the order of 500°C. The bit is pressed against the connection surface 12 with a force such that the wire is slightly deformed, as indicated at 22. As a result of the high temperature, the insulation layer 20 disappears in this area. The insulation layer draws away to the locations 28 spaced from the soldering bit on either side thereof. The copper wire, now bare, then merges with the bump, as it were, so that the joint is effected. The bit 31, sometimes referred to as thermode, can then be withdrawn.

## Claims

1. A method for the manufacture of a radio-frequency detection label, comprising a resonant circuit which comprises at least an antenna coil and a resonance capacitor, characterized in that an antenna coil made from insulated copper wire is used; all other electronic components, including the resonance capacitor of the antenna circuit, are arranged as an integrated circuit (IC) on a chip; and the coil leads are connected directly to the integrated circuit without the intermediacy of an extra substrate or lead frame with any electrical connections for mounting the IC and the coil leads.

2. A method as claimed in claim 1, characterized in that the antenna coil leads, consisting of insulated wire, are locally stripped of their insulation before being connected to the intended connection surfaces on the IC so as to be electrically conductive.

3. A method as claimed in claim 2, characterized in that the local removal of the insulation layer of the coil leads is carried out with a hot jet of a non-oxidizing or an inert gas.

4. A method as claimed in claim 3, characterized in that the temperature of the hot gas jet is between 550°C and 850°C.

5. A method as claimed in claim 3 or 4, characterized in that the gas consists of nitrogen or argon.

6. A method as claimed in claim 3 or 4, characterized in that a few percent of hydrogen have been added to the hot gas to prevent residual oxidation *inter alia* by entrained oxygen from the ambient air.

7. A method as claimed in any one of claims 2 to 6, characterized in that the end leads stripped of their insulation are ultrasonically welded to the connection surfaces of the IC so as to be electrically conductive.

8. A method as claimed in any one of claims 2 to 6, characterized in that the bare leads stripped of their insulation are soldered to the connection surfaces of the IC.

9. A method as claimed in any one of claims 2 to 6, characterized in that the end leads stripped of their insulation are connected to the connection surfaces of the IC with an omnidirectionally or unidirectionally conducting glue or glue foil.

10. A method as claimed in any one of claims 2 to 6, characterized in that the coil leads stripped of their insulation are connected to the connection surfaces of the IC by thermo-compression welding.

11. A method for the manufacture of a radio-frequency detection label as claimed in claim 1, characterized in that the antenna coil leads formed by insulated wire, without being priorly stripped of their insulation, are connected to the connection surfaces of the IC using a heated soldering bit which removes the insulation at the connection surfaces and subsequently effects the connection between the coil leads and the connection surfaces.

12. A method as claimed in claim 11, characterized in that the connection surfaces have been provided beforehand with a lead-tin layer (soldering bump).

13. A method as claimed in claim 11, characterized in that the connection surfaces have been provided beforehand with a noble metal layer and the coil leads are pressed firmly against the connection surfaces to effect a thermo-compression weld.

14. A method as claimed in any one of the preceding claims, characterized in that the precise tuning of the resonant frequency of the resonant circuit is effected during manufacture by adjusting the self-induction of the coil to the individual 5 value of the resonance capacitor of the IC through (automatic) adjustment of the number of windings of the coil per product during the manufacturing process, after measurement of the value of this capacitor.

15. A method as claimed in any one of claims 1 to 13, characterized in that the individual adjustment of the self-induction of the coil to the resonance capacitor takes place after the winding process by arranging a ferromagnetic element in, or moving said element to, the proper position within the coil.

16. A radio-frequency detection label manufactured using the method as claimed in any one of the preceding claims.

17. A radio-frequency detection label as claimed in claim 16 constructed as an electronically coded identification label.

## Patentansprüche

1. Verfahren zur Herstellung eines Funkfrequenzdetektionsetiketts mit einer Resonanzschaltung, die mindestens eine Antennenspule und einen Resonanzkondensator aufweist, dadurch gekennzeichnet, daß eine Antennenspule aus isoliertem Kupferdraht verwendet wird; daß sämtliche anderen elektronischen Komponenten einschließlich des Resonanzkondensators der Antennenschaltung als integrierte Schaltung (IC) auf einem Chip angeordnet werden; und die Spulen-Anschlüsse direkt mit der integrierten Schaltung verbunden werden, ohne Zwischenschaltung eines zusätzlichen Substrats oder eines Leiterrahmens mit irgendwelchen elektrischen Verbindungen zum Befestigen der IC- und der Spulen-Anschlüsse.

2. Verfahren nach Anspruch 1, dadurch gekennzeichnet, daß die Antennenspulen-Anschlüsse, die isolierten Draht aufweisen, vor der Verbindung mit den gewünschten Verbindungsflächen auf der IC örtlich von ihrer Isolierung befreit werden, so daß sie elektrisch leitend sind.

3. Verfahren nach Anspruch 2, dadurch gekennzeichnet, daß das örtliche Entfernen der Isolierschicht der Spulen-Anschlüsse mit einem heißen Strahl aus einem nichtoxidierenden Gas oder einem Inertgas durchgeführt wird.

4. Verfahren nach Anspruch 3, dadurch gekennzeichnet, daß die Temperatur des heißen Gases zwischen 550° und 850°C liegt.

5. Verfahren nach Anspruch 3 oder 4, dadurch gekennzeichnet, daß das Gas Stickstoff oder Argon aufweist.

6. Verfahren nach Anspruch 3 oder 4, dadurch gekennzeichnet, daß dem heißen Gas einige Prozent an Stickstoff hinzugegeben worden sind, um eine unter anderem durch eingebrachten Sauerstoff aus der Umgebungsluft verursachte Restoxidierung zu verhindern.

7. Verfahren nach einem der Ansprüche 2 bis 6, dadurch gekennzeichnet, daß die abisolierten Endanschlüsse durch Ultraschall mit den Verbindungsflächen der IC verbunden werden, so daß sie elektrisch leitend sind.

8. Verfahren nach einem der Ansprüche 2 bis 6, dadurch gekennzeichnet, daß die abisolierten freiliegenden Anschlüsse mit den Verbindungsflächen der IC verlötet werden.

9. Verfahren nach einem der Ansprüche 2 bis 6, dadurch gekennzeichnet, daß die abisolierten Endanschlüsse mittels eines omnidirektional oder unidirektional leitenden Klebers oder Kleberfilms mit den Verbindungsflächen der IC verbunden werden.

10. Verfahren nach einem der Ansprüche 2 bis 6, dadurch gekennzeichnet, daß die abisolierten Spulen-Anschlüsse durch Wärmekompressionsschweißen mit den Verbindungsflächen der IC verbunden werden.

11. Verfahren zur Herstellung eines Funkfrequenzdetektionsetiketts nach Anspruch 1, dadurch gekennzeichnet, daß die aus isoliertem Draht gebildeten Antennenspulen-Anschlüsse, ohne zuvor von ihrer Isolierung befreit zu werden, mit den Verbindungsflächen der IC mittels eines erwärmten Lötstücks verbunden werden, das die Isolierung an den Verbindungsflächen entfernt und anschließend die Verbindung zwischen den Spulen-Anschlüssen und den Verbindungsflächen bewirkt.

12. Verfahren nach Anspruch 11, dadurch gekennzeichnet, daß die Verbindungsflächen im voraus mit einer Anschluß-Zinnschicht (Lötkontakthügel) versehen worden sind.

13. Verfahren nach Anspruch 11, dadurch gekennzeichnet, daß die Verbindungsflächen im voraus mit einer Edelmetallschicht versehen worden sind und die Spulen-Anschlüsse zwecks Herbeiführung einer Wärmekompressionsschweißung fest gegen die Verbindungsflächen gedrückt werden.

14. Verfahren nach einem der vorhergehenden Ansprüche, dadurch gekennzeichnet, daß das Feinabstimmen der Schwingfrequenz der Resonanzschaltung während der Herstellung vorgenommen wird, indem während des Herstellungsvorgangs nach der Messung des Wertes dieses Kondensators durch (automatisches) Einstellen der Anzahl der Wicklungen der Spule pro Produkt die Selbstinduktion der Spule auf den individuellen Wert des Resonanzkondensators der IC abgestimmt wird.

15. Verfahren nach einem der Ansprüche 1 bis 13, dadurch gekennzeichnet, daß die individuelle Abstimmung der Selbstinduktion der Spule auf den Resonanzkondensator nach dem Wickelvorgang erfolgt, indem ein ferromagnetisches Element in der korrekten Position in der Spule angeordnet wird oder das Element in diese Position bewegt wird.

16. Funkfrequenzdetektionsetikett, hergestellt durch das Verfahren nach einem der vorhergehenden Ansprüche.

17. Funkfrequenzdetektionsetikett nach Anspruch 16, ausgebildet als elektronisch kodiertes Identifikationsetikett.

## Revendications

1. Procédé pour la fabrication d'une étiquette de détection de radiofréquence, comprenant un circuit résonant qui comprend au moins un bobinage d'antenne et un condensateur de résonance, caractérisé en ce que l'on utilise un bobinage d'antenne fait de fil de cuivre isolé ; tous les autres composants électroniques, comportant le condensateur de résonance du circuit d'antenne, sont conçus sous la forme d'un circuit intégré (IC) placé sur une puce ; et les fils conducteurs du bobinage sont connectés directement au circuit intégré sans l'intermédiaire d'un substrat ou d'une grille de connexion supplémentaire au moyen de connexions électriques quelconques permettant le montage du circuit intégré et des fils conducteurs du bobinage.

2. Procédé selon la revendication 1, caractérisé en ce que les fils conducteurs du bobinage d'antenne, consistant en fil métallique isolé, sont localement dénudés de leur isolation avant d'être connectés aux surfaces de connexion prévues placées sur le circuit intégré de façon à être électriquement conducteurs.

3. Procédé selon la revendication 2, caractérisé en ce que l'enlèvement local de la couche d'isolation des fils conducteurs du bobinage est effectué au moyen d'un jet chaud d'un gaz non oxydant ou d'un gaz inerte.

4. Procédé selon la revendication 3, caractérisé en çe que la température du jet de gaz chaud est comprise entre 550°C et 850°C.

5. Procédé selon la revendication 3 ou 4, caractérisé en ce que le gaz consiste en azote ou en argon.

6. Procédé selon la revendication 3 ou 4, caractérisé en ce qu'un petit pourcentage d'hydrogène a été ajouté au gaz chaud afin d'empêcher une oxydation résiduelle, entre autres, par l'oxygène entraîné provenant de l'air ambiant.

7. Procédé selon l'une quelconque des revendications 2 à 6, caractérisé en ce que les fils conducteurs terminaux dénudés de leur isolation sont soudés par ultrasons aux surfaces de connexion du circuit intégré de façon à être électriquement conducteurs.

8. Procédé selon l'une quelconque des revendications 2 à 6, caractérisé en ce que les fils conducteurs nus dénudés de leur isolation sont soudés aux surfaces de connexion du circuit intégré.

9. Procédé selon l'une quelconque des revendications 2 à 6, caractérisé en ce que les fils conducteurs terminaux dénudés de leur isolation sont connectés aux surfaces de connexion du circuit intégré au moyen d'une colle ou d'un feuillet de colle conduisant le courant électrique de façon omnidirectionnelle ou unidirectionnelle.

10. Procéde selon l'une quelconque des revendications 2 à 6, caractérisé en ce que les fils conducteurs du bobinage dénudés de leur isolation sont connectés aux surfaces de connexion du circuit intégré par soudage par thermocompression.

11. Procédé de fabrication d'une étiquette de détection de radiofréquence selon la revendication 1, caractérisé en ce que les fils conducteurs du bobinage d'antenne formés de fil métallique isolé sont, sans avoir été antérieurement dénudés de leur isolation, connectés aux surfaces de connexion du circuit intégré au moyen d'un morceau de soudure chauffé qui retire l'isolation au niveau des surfaces de connexion et effectue ultérieurement la connexion entre les fils conducteurs du bobinage et les surfaces de connexion.

12. Procédé selon la revendication 11, caractérisé en ce que les surfaces de connexion ont été préalablement dotées d'une couche plomb-étain (bosse de soudure).

13. Procédé selon la revendication 11, caractérisé en ce que les surfaces de connexion ont été préalablement dotées d'une couche de métal noble et les fils conducteurs du bobinage sont pressés fortement contre les surfaces de connexion afin que soit réalisé un soudage par thermocempression.

14. Procédé selon l'une quelconque des revendications précédentes, caractérisé en ce qu'on effectue, pendant la fabrication, un réglage d'accord précis de la fréquence de résonance du circuit résonant pu ajustement de l'auto-induction du bobinage sur la valeur particulière du condensateur de résonance du circuit intégré via un ajustement (automatique) du nombre d'enroulements du bobinage par produit pendant le processus de fabrication, après mesure de la valeur de ce condensateur.

15. Procédé selon l'une quelconque des revendications 1 à 13, caractérisé en ce que l'ajustement particulier de l'auto-induction du bobinage sur le condensateur de résonance s'effectue après le processus d'enroulement par mise en place d'un élément ferromagnétique à la position appropriée à l'intérieur du bobinage ou par déplacement dudit élément jusqu'à cette position appropriée.

16. Etiquette de détection de radiofréquence, fabriquée au moyen du procédé défini dans l'une quelconque des revendications précédentes.

17. Etiquette de détection de radiofréquence selon la revendication 16, construite sous la forme d'une étiquette d'identification codée électroniquement.
